# EUROPEAN PATENT APPLICATION

(11) **EP 3 346 453 A1**
(43) Date of publication of application: **11.07.2018**
(21) Application number: 16841964.6
(22) Date of filing: 01.09.2016
(51) Int. Cl.: G07G 1/12, G06Q 10/00, G06Q 50/12, G07G 1/01, G07G 1/14

(54) **ORDER PROCESSING SYSTEM AND ORDER PROCESSING METHOD**

(30) Priority: 04.09.2015 JP 2015175071
(71) Applicant: Recruit Holdings Co., Ltd., Tokyo 104-0061 (JP)
(72) Inventor: ASADA, Junji, Tokyo 100-6640 (JP)
(74) Representative: EIP
(86) International application number: PCT/JP2016/075659
(87) International publication number: WO 2017/038935

(57) **Abstract**

A product or service that is more suitable for each target person is suggested.

Provided is an order processing system including: a mobile terminal 10 to be used for an input of an order; a register terminal 11 to be used for processing of the order; and a server 200 communicably connected to the register terminal 11, wherein the register terminal 11 generates first data in which human attributes at least including a gender, an age and an ethnic attribute of a target person and a content of a product or service provided to the target person are associated with each other and transmits the first data to the server 200, and the server 200 accumulates the first data transmitted from the register terminal 11, generates second data in which the content of the product or service that is highly frequently used is extracted for the respective human attributes, based on the first data and transmits the second data to the register terminal 11.

## Description

### Cross Reference to Related Application

The present application is based on Japanese Patent Application No. 2015-175071 filed on September 4, 2015, the disclosure of which is incorporated herein by reference.

### Technical Field

The present invention relates to a system, etc., for processing, for example, information relating to an order (for example, item, quantity, price, etc.) from a customer in, e.g., a restaurant.

### Background Art

As means for performing processing such as receiving an order from a customer in a shop such as a restaurant, systems utilizing smartphones or tablet computers are known (see, for example, Patent Literature 1). Systems utilizing tablet computers or the like such as mentioned above can be introduced at relatively low costs and thus are advantageous in that the systems can easily be introduced also in small-scale shops and also can enhance order processing efficiency in small-scape shops. Also, use of such system as mentioned above enables provision of what is called a POS function (see, for example, Patent Literature 2).

The POS function provided by such system as above is, for example, a function such as merely summarizing, e.g., a product selling status, a product inventory status and a sales status in a shop and outputting results of the summarization in the form of, e.g., numeric values and/or graphs. Thus, it is difficult to suggest a product or service that is more suitable for a customer, which is a target person, according to the attributes of the customer.

Patent Literature 1: Japanese Patent Laid-Open No. 2013-149195
Patent Literature 2: Japanese Patent Laid-Open No. 2014-10553

### Disclosure of Invention

An object of the present invention is to provide a technique enabling suggestion of a product or service that is more suitable for each target person.

An order processing system according to an aspect of the present invention includes: (a) a mobile terminal to be used for an input of an order; (b) a register terminal to be used for processing of the order; and (c) a server communicably connected to the register terminal, wherein (d) the register terminal generates first data in which human attributes at least including a gender, an age and an ethnic attribute of a target person and a content of a product or service provided to the target person are associated with each other and transmits the first data to the server, and (e) the server accumulates the first data transmitted from the register terminal, generates second data in which the content of the product or service that is highly frequently used is extracted for the respective human attributes, based on the first data, and transmits the second data to the register terminal.

### [Advantageous Effect of Invention]

The above-stated configuration enables suggestion of a product or service that is more suitable for each target person by utilizing information obtained based on the second data, the information relating to the content of the product or service that is highly frequently used, for the respective human attributes (for example, displaying such information on a mobile terminal).

### Brief Description of Drawings

[Figure 1] Figure 1 is a block diagram illustrating an overall configuration of an order processing system according to the present embodiment.
[Figure 2] Figure 2 is a block diagram illustrating a detailed configuration of an internal system.
[Figure 3] Figure 3 is a conceptual diagram for describing data transmitted/received between each of mobile terminals and a register terminal.
[Figure 4] Figure 4 is a block diagram illustrating a detailed configuration of a register terminal.
[Figure 5] Figure 5 is a block diagram illustrating a detailed configuration of a server.
[Figure 6] Figure 6 is a flowchart illustrating a procedure of operation of the register terminal.
[Figure 7] Figure 7 is a flowchart illustrating a procedure of operation of the server.
[Figure 8] Figure 8 is a diagram illustrating an example of a database accumulated in the server.
[Figure 9] Figure 9 is a flowchart illustrating a procedure of operation of a mobile terminal.
[Figure 10] Figure 10 is a schematic diagram illustrating an example of display on a mobile terminal.

### Description of Embodiment

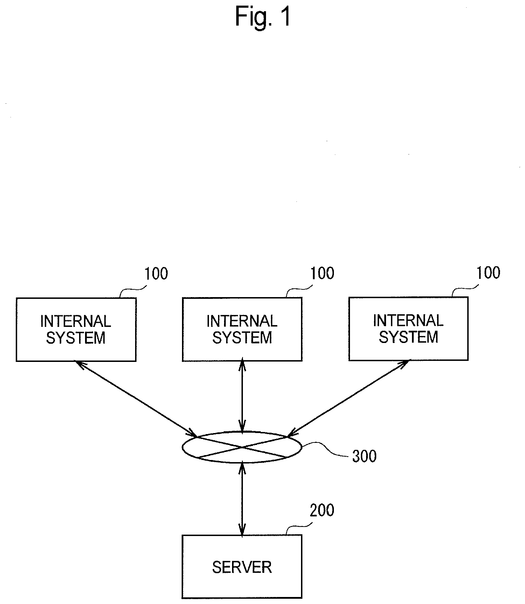

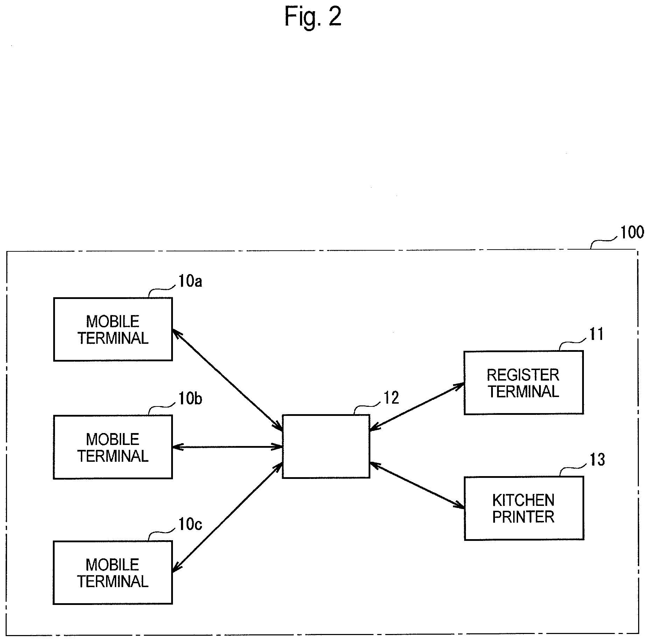

Figure 1 is a block diagram illustrating an overall configuration of an order processing system according to an embodiment. Figure 2 is a block diagram illustrating a detailed configuration of an internal system. The order processing system illustrated in Figure 1 includes a plurality of internal systems 100, and a server 200 installed outside the shops. Each internal system 100 and the server 200 are interconnected via a communication network 300 such as the Internet so that the internal system 100 and the server 200 can communicate with each other. Also, as illustrated in Figure 2, each internal system 100 is, for example, a system installed at a restaurant, and includes a plurality of mobile terminals 10a, 10b, 10c, a register terminal 11, a wireless communication apparatus 12 and a kitchen printer 13.

Each of the mobile terminals 10a, 10b, 10c is carried by a clerk in the shop and used for guiding incoming customers to an available table or receiving orders from customers. For each of the mobile terminals 10a, etc., for example, a commercially available smartphone with predetermined software (what is called "application") installed in advance can be used.

The register terminal 11 provides, e.g., available table information or menu information to the respective mobile terminals 10a, etc., and receives, e.g., information relating to orders from, e.g., the respective mobile terminals 10a, etc., and transmits the information to the kitchen printer 13 or performs processing relating to operation of the internal system 100 such as performing billing (bill settlement). For the register terminal 11, for example, a commercially available tablet computer with predetermined software (what is called "application") installed in advance can be used.

The wireless communication apparatus 12 interconnects the respective mobile terminals 10a, etc., the register terminal 11 and the kitchen printer 13 via wireless communication in such a manner that the mobile terminals 10a, etc., the register terminal 11 and the kitchen printer 13 can communicate with one another. Connection of the respective devices in the shop with a wireless communication apparatus 12 as a center forms a local area network. The wireless communication apparatus 12 is connected also to the communication network 300, and interconnects the mobile terminals 10a, etc., and the register terminal 11, and the server 200 via the communication network 300 in such a manner that the mobile terminals 10a, etc., and the register terminal 11, and the server 200 can communicate with each other.

The kitchen printer 13 is installed at a kitchen (cooking area) in the shop, and upon provision of the content of an order acquired using the relevant mobile terminal 10a or the like from the register terminal 11, prints the content of the order on a sheet of paper and outputs the sheet. The printed sheet is used for staff in the kitchen to proceed cooking or prepare a drink according to the order content.

The server 200 illustrated in Figure 1 acquires the content of orders and other data from the respective mobile terminals 10a, etc., and the register terminal 11 in the internal system 100 and stores such data in a storage section. Using the data accumulated in the storage section, e.g., sales management and/or analysis relating to hot-selling products (POS processing) are performed. If a plurality of internal systems 100 are installed at respective franchised shops, acquisition of data from the internal systems 100 of the respective shops enables unified management of operation statuses of the respective shops on the server 200 side.

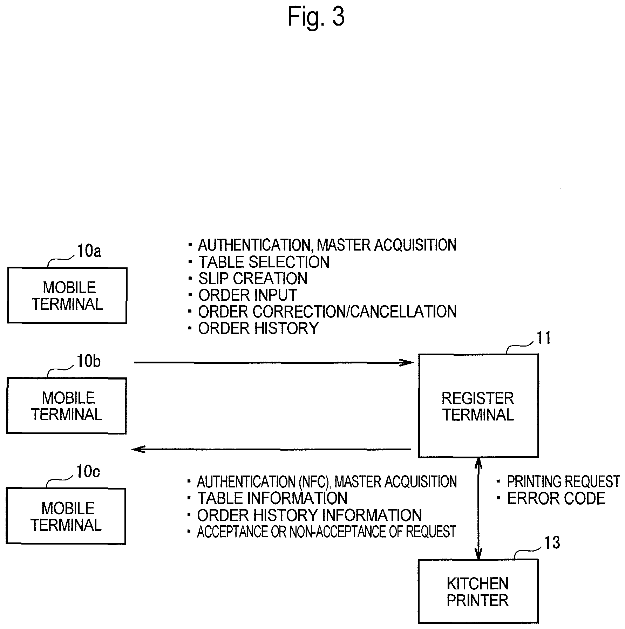

Figure 3 is a conceptual diagram for describing data transmitted/received between the respective mobile terminals and the register terminal. For activation of the internal system 100, first, processing for linking the respective mobile terminals 10a, etc., and the register terminal 11 with each other (authentication) is performed. For example, the respective mobile terminals 10a, etc., and the register terminal 11 both comply with the NFC (Near Field Communication) standard, and the authentication is completed by holding each of the mobile terminals 10a, etc., over the register terminal 11. After the completion of the authentication, data is directly transmitted/received between the respective mobile terminals 10a, etc., and the register terminal 11. Also, the register terminal 11 transmits/receives data to/from the server 200 as necessary. The data to be transmitted/received will be described below.

"Master acquisition" refers to acquiring data indicating information on menu items registered in the register terminal 11 (e.g., hamburgers, cafe au lait, etc., and respective prices thereof) and information on tables set in the shop (e.g., table numbers 1, 2, ..., and a capacity of each stable) from the register terminal 11 to the respective mobile terminals 10a, and the respective mobile terminals 10a, etc., acquiring the data.

"Table selection" refers to, for example, when a customer is seated at a number 15 table, a clerk tapping a "number 15" icon on a list of table numbers on the relevant mobile terminal 10a or the like to transmit data indicating that the number 15 table has been selected from the mobile terminal 10a or the like to the register terminal 11. Also, "table information" refers to, upon selection of a table number via the relevant mobile terminal 10a or the like, transmitting data indicating information on a table corresponding to the table number from the register terminal 11 to the relevant mobile terminal 10a or the like. Information on the table mentioned here is, e.g., the capacity of the table and availability of the table. If the table selected via the relevant mobile terminal 10a or the like is an available table, a message indicating that effect is displayed on the relevant mobile terminal 10a or the like, and a button for creating a new slip is also displayed. Tapping the button and inputting information on, e.g., the number of customers enable creation of a new slip for the table.

"Order input" refers to, if a new slip is created or a selected table is already in use, an image for order input being displayed and data indicating that an order from a customer is input by a clerk based on the image being generated by the relevant mobile terminal 10a or the like. Selectable menu items are displayed on a display section of the relevant mobile terminal 10a or the like and the menu item ordered by the customer can be selected by tapping a relevant icon from among the menu items. "Order correction/cancellation" refers to, when a menu item once selected is wrong, generating data indicating correction of the selected menu item to another menu item or deletion of the selected menu item in the relevant mobile terminal 10a or the like.

"Order history" refers to transmitting data indicating information on the menu item, selection of which has been determined through the aforementioned order input (or the order correction/cancellation), from the relevant mobile terminals 10a or the like to the register terminal 11. "Order history information" refers to, if a new order is received at a table already occupied, transmitting data indicating information on menu items ordered at the table until that time from the register terminal 11 to the relevant mobile terminal 10a or the like.

"Acceptance or non-acceptance of request" refers to transmitting data indicating information on whether or not an order input has been accepted from the register terminal 11 to the relevant mobile terminal 10a or the like. For example, an order for a selected menu item cannot be accepted because, e.g., the menu item is sold out, that effect is indicated on the relevant mobile terminals 10a or the like. Also, if an order input is not transmitted from the register terminal 11 to the kitchen printer 13, also, that effect is indicated on the relevant mobile terminal 10a or the like.

"Printing request" refers to transmitting data providing an instruction to print the content of a menu item, an order of which has been input, from the register terminal 11 to the kitchen printer 13. Also, "error code" refers to, if the kitchen printer 13 cannot perform printing, for example, the kitchen printer 13 is out of printer sheets, transmitting data indicating that effect from the kitchen printer 13 to the register terminal 11.

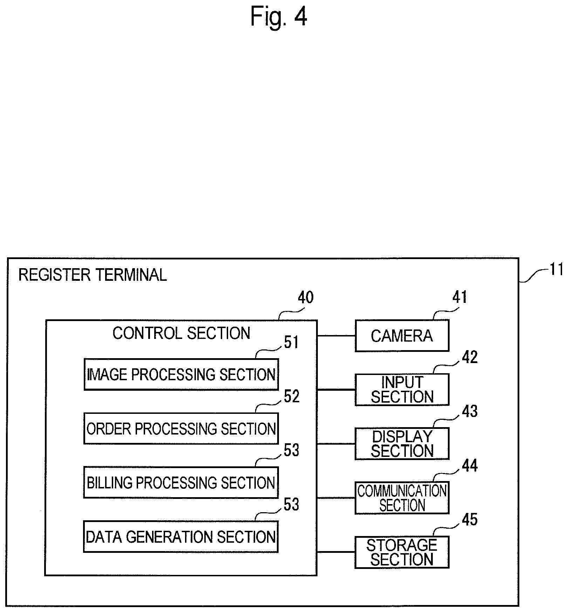

Figure 4 is a block diagram illustrating a detailed configuration of the register terminal. The register terminal 11 illustrated in Figure 4 includes a control section 40, camera 41, an input section 42, a display section 43, a communication section 44 and a storage section 45.

The control section 40 is provided, for example, by execution of a predetermined operation program in a computer system including, e.g., a CPU, a ROM and a RAM, and includes an image processing section 51, an order processing section 52, a billing processing section 53 and a data generation section 53 as functional blocks.

The camera 41 is used for taking an image of a customer visiting the shop. The camera 41 is integrated with the register terminal 11, but may be configured as a detachable one provided separately from the register terminal 11 and connected to the control section 40.

The input section 42 is, for example, input means such as a touch panel connected to the control section 40, and is used for a clerk to input various pieces of information. The display section 43 is, for example, display means such as liquid-crystal display connected to the control section 40, and displays various types of images. The communication section 44 is connected to the control section 40 and performs processing relating to external information communication. The storage section 45 is storage means such as a hard disk device connected to the control section 40 and stores various types of data.

The image processing section 51 performs predetermined image recognition processing for the image of the customer (in particular, the image of his/her face) taken by the camera 41 to determine (estimate) human attributes, more specifically, at least "gender", "age (age range)" and "ethnic attribute" of the customer. The image processing section 51 corresponds to the "determination section".

Here, as a result of determination of "age", the age may be identified as a specific numerical value (for example, 35 years old) or as a certain range of ages (for example, 20s or 50s).

Here, "ethnic attribute" refers to a group of people sharing one or more elements, for example, language, race, culture and/or history, and in the present embodiment, "ethnic attribute" is represented by a category "Xx-ese, Xx-an, Xx-ish or the like" (for example, Japanese, American or Malaysian).

The order processing section 52 performs processing for, in response to information relating to an order in the shop, the order being input by a clerk using the relevant mobile terminal 10a or the like, filling the order (see Figure 3).

The billing processing section 53 performs processing for payment of food/drink charge by a customer based on the content of the orders. More specifically, the billing processing section 53 performs, e.g., calculation of a total amount of food/drink charge, and issuance of a detail receipt for the content of the food/drink, and if the payment is made via a credit card, processing accompanying the credit card payment.

The data generation section 53 generates data in which information relating to the content of a bill processed by the billing processing section 53, that is, the content of products or service provided to a customer that is a target person (bill information) and user information including, e.g., human attributes of the customer that paid the bill and a time/date of the bill payment are associated with each other (hereinafter referred to as "first data" for sake of convenience). The generated first data is transmitted to the server 200 via the communication section 44.

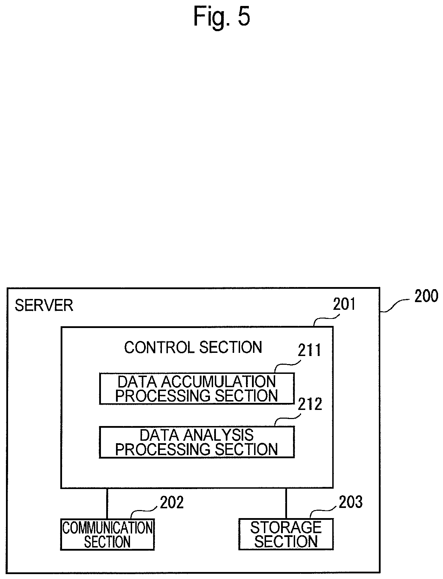

Figure 5 is a block diagram illustrating a detailed configuration of the server. The server 200 illustrated in Figure 5 includes a control section 201, a communication section 202 and a storage section 203. The control section 201 is provided, for example, by execution of a predetermined operation program in a computer system including, e.g., a CPU, a ROM and a RAM, and includes a data accumulation processing section 211 and a data analysis processing section 212 as functional blocks. The communication section 202 is connected to the control section 201 and performs processing relating to external information communication. The storage section 203 is storage means such as a hard disk device connected to the control section 201, and stores various types of data.

The data accumulation processing section 211 accumulates a plurality of first data transmitted from the respective register terminals 11 of the plurality of internal systems 100, in the storage section 203 and thereby generates a database including a large number of user information-bill information sets in the storage section 203.

Using the database accumulated in the storage section 203, the data analysis processing section 212 performs analysis of, e.g., hot-selling menu items based on the user information. More specifically, menu items highly frequently ordered by a user group specified by at least a gender, an age and an ethnic attribute are extracted. Here, the user group may further be segmented for the analysis, in consideration of, e.g., season, time period and region. This analysis provides hot-selling item information for each group, for example, information that hot-selling products for a user group of "30s, male and Japanese" are "aaa and bbb", and based on the information, recommendation information for the user group is generated. Second data including the recommendation information is transmitted to and utilized in the respective internal systems 100.

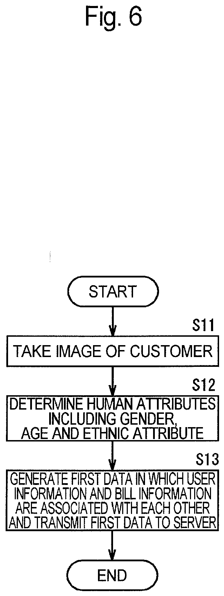

Figure 6 is a flowchart illustrating a procedure of operation of the register terminal. Note that the respective register terminals 11 included in the plurality of internal systems 100 perform operation that is similar to the operation.

The image processing section 51 of the control section 40 takes an image of a customer that is a target person, in an image range at least including the face, via the camera 41, at the time of, for example, bill payment (step S11). Then, the image processing section 51 performs predetermined image recognition processing for the image of the target person taken by the camera 41 (in particular, the face image) to determine human attributes including the gender (male/female), the age and the ethnic attribute of the target person (step S12).

Next, the data generation section 53 of the control section 40 generates first data in which information on the human attributes of the target person acquired from the image processing section 51 and user information including information on a time/date and a region (location) of the acquisition of the information, and bill information including, e.g., items ordered by the target person are associated with each other, and transmits the first data to the server 200 via the communication section 44 (step S13).

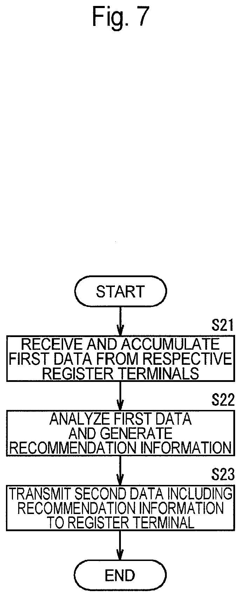

Figure 7 is a flowchart illustrating a procedure of operation of the server.

The data accumulation processing section 211 of the control section 201 receives first data transmitted from the respective register terminals 11 of the internal systems 100, and accumulates the first data in the storage section 203 (step S21). Consequently, a database including a large number of user information-bill information sets is formed in the storage section 203 of the server 200.

Next, the data analysis processing section 212 of the control section 201 performs analysis based on the database including the large number of first data stored in the storage section 203 to generate hot-selling item information, and generates recommendation information based on the hot-selling item information (step S22).

Next, the data analysis processing section 212 transmits second data including the recommendation information to the respective register terminals 11 in the internal systems 100 via the communication section 202 (step S23)

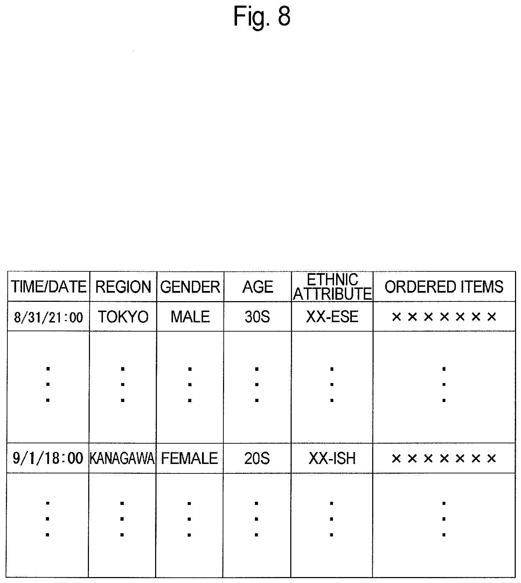

Figure 8 is a diagram illustrating an example of the database accumulated in the server. In the database illustrated here, individual records each including additional information such as the time/date of a target person's eating/drinking (for example, 21: 00 on August 31) and the region (for example, Tokyo), respective pieces of information on the gender, the age and the ethnic attribute, and ordered items are formed. As a result of accumulation of a large number of such records based on the first data transmitted from the respective register terminals 11, the database is built. Using the database, hot-selling item information can be generated by extracting, for each of user groups segmented according to human attributes including a gender, an age (age range) and an ethnic attribute (Xx-ese, Xx-an, Xx-ish or the like), a frequency of an order (frequency of use) of each product by the user group, and recommendation information can be generated by extracting highly frequently ordered items (for example, top three to five items) from that information. Here, further reference to the times/dates enables generation of, for example, hot-selling item information for each season and/or each time period and generation of recommendation information based on the hot-selling item information. Also, further reference to the regions enables generation of hot-selling item information for each region and generation of recommendation information based on the hot-selling item information.

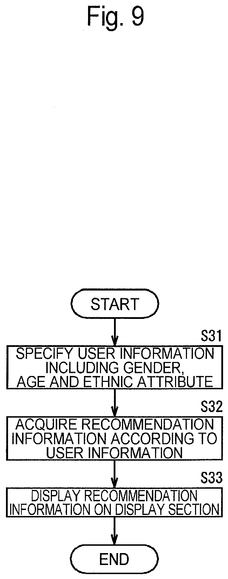

Figure 9 is a flowchart illustrating a procedure of operation of a mobile terminal. Here, description of the mobile terminal 10a will be provided, but the other mobile terminals 10b, 10c operate in a manner that is similar to the mobile terminal 10a.

The mobile terminal 10a specifies user information including the gender, the age and the ethnic attribute of a customer that is a target person, based on information input by a clerk using the input section (step S31). Here, the user information may be specified not by the clerk's input but by image recognition processing based on an image taken of the target person. Also, if the target person is a customer having a reservation, a part (for example, the gender) or all of the user information may be specified using a member ID of the target person.

Next, the mobile terminal 10a acquires recommendation information according to the specified user information (step S32). Here, for example, recommendation information may be acquired from the register terminal 11 each time user information is transmitted to the register terminal 11. Also, it is possible that second data including recommendation information is transmitted from the register terminal 11 to the mobile terminal 10a and stored in the storage section of the mobile terminal 10a in advance and based on the stored second data, recommendation information according to the user information is acquired.

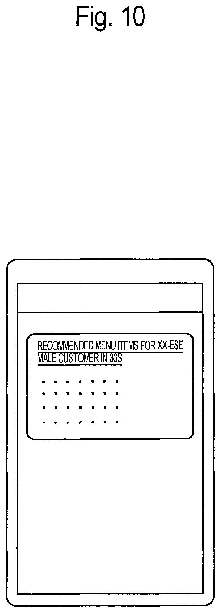

Next, the mobile terminal 10a displays the recommendation information on the display section (step S33). Figure 10 illustrates an example of display on the mobile terminal. As illustrated in the figure, as recommendation information for the specified user information (for example, 30s, male and Xx-ese), some recommended menu items are provided on the display section. A clerk can suggest recommended menu items to the customer while referring to the display. Subsequently, the clerk takes orders as appropriate, and information on the orders is transmitted to the register terminal 11 and order processing is performed in the register terminal 11.

The present embodiment described above enables suggestion of food/drink menu items that are more suitable for each customer that is a target person. Also, in the order processing system according to the present embodiment, not the face image taken, but the human attributes obtained as a result of the image recognition processing are transmitted from the register terminal 11 to the server 200. Thus, an amount of data transmitted from the register terminal 11 to the server 200 can be reduced, and there is no need to transmit privacy data such as a face image. Therefore, the order processing system according to the present embodiment can be used also in a region in which a communication channel has a narrow bandwidth or a region in which a communication channel has low reliability.

The present invention is not limited to the above-described embodiment, and various alterations are possible within the scope of the spirit of the present invention. For example, the above-described embodiment indicates an example in which the present invention is employed in a restaurant, but the present invention is not limited to this example, and is applicable to systems providing various types of products or service. Also, as an example of the "ethnic attribute", a category such as "Xx-ese, Xx-an, Xx-ish or the like" is indicated, but the "ethnic attribute" is not limited to this example. For example, a wider category such as "Asian" may be set, or the category may further be segmented. Also, determination of the human attributes via the register terminal may be made based on information input by a clerk via the input section.

### Reference Signs List

10a, 10b, 10c: mobile terminal
11: register terminal
12: wireless communication apparatus
13: kitchen printer
40: control section
41: camera
42: input section
43: display section
44: communication section
45: storage section
100: internal system
200: server
201: control section
202: communication section
203: storage section
211: data accumulation processing section
212: data analysis processing section
300: communication network

## Claims

1. An order processing system comprising:
a mobile terminal to be used for an input of an order;
a register terminal to be used for processing of the order; and
a server communicably connected to the register terminal, wherein
the register terminal generates first data in which human attributes at least including a gender, an age and an ethnic attribute of a target person and a content of a product or service provided to the target person are associated with each other and transmits the first data to the server, and
the server accumulates the first data transmitted from the register terminal, generates second data in which the content of the product or service that is highly frequently used is extracted for the respective human attributes, based on the first data, and transmits the second data to the register terminal.

2. The order processing system according to claim 1, wherein the mobile terminal displays information relating to the content of the product or service that is highly frequently used, for the respective human attributes, using the second data transmitted from the server to the register terminal.

3. The order processing system according to claim 1 or 2, wherein:
the register terminal includes
a determination section that determines the human attributes,
a data generation section that generates the first data, and
a first transmission section that transmits the first data to the server, and
the server includes
a storage section,
a data accumulation processing section that accumulates the first data in the storage section,
a data analysis processing section that generates the second data based on the first data accumulated in the data accumulation processing section, and
a second transmission section that receives the first data and transmits the second data.

4. The order processing system according to claim 3, wherein the determination section determines at least part of the human attributes by performing image recognition processing using an image of the target person.

5. An order processing system comprising:
a mobile terminal to be used for an input of an order;
a register terminal to be used for processing of the order; and
a server communicably connected to the register terminal, wherein
the register terminal
is a tablet computer, and includes
a camera that takes an image of a target person;
a determination section that performs image recognition processing for the image taken by the camera to determine human attributes at least including a gender, an age and an ethnic attribute of the target person,
a data generation section that generates first data in which information including the human attributes determined by the determination section and a content of a product or service provided to the target person are associated with each other, and
a first transmission section that transmits the first data generated by the data generation section to the server,
the server includes
a storage section,
a data accumulation processing section that accumulates the first data received from the register terminal in the storage section,
a data analysis processing section that generates second data in which the content of the product or service that is highly frequently used is extracted for the respective human attributes, based on the first data accumulated in the data accumulation processing section, and
a second transmission section that transmits the second data generated by the data analysis processing section to the register terminal, and
the mobile terminal includes
a display section that acquires, based on human attributes identified by the image recognition processing based on the image taken of the target person, recommendation information for the human attributes from the second data transmitted to the register terminal, and displays the acquired recommendation information.

6. An order processing method in a system including a mobile terminal to be used for an input of an order, a register terminal to be used for processing of the order, and a server communicably connected to the register terminal, the method comprising:
causing the register terminal to generate first data in which human attributes at least including a gender, an age and ethnic attributes of a target person and a content of a product or service provided to the target person are associated with each other and transmit the first data to the server; and
causing the server to accumulate the first data transmitted from the register terminal, generate second data in which the content of the product or service that is highly frequently used is extracted for the respective human attributes, based on the first data and transmit the second data to the register terminal.

7. An order processing method in a system including a mobile terminal to be used for an input of an order, a register terminal to be used for processing of the order, and a server communicably connected to the register terminal, the method comprising:
causing the register terminal, which is a tablet computer, to take an image of a target person, perform image recognition processing for the taken image to determine human attributes at least including a gender, an age and an ethnic attribute of the target person, generate first data in which information including the determined human attributes and information relating to a content of a product or service provided to the target person are associated with each other, and transmit the first data to the server; and
causing the server, which includes a storage section, to accumulate the first data transmitted from the register terminal in the storage section, generate second data in which the content of the product or service that is highly frequently used is extracted for the respective human attributes, based on the accumulated first data and transmit the second data to the register terminal; and
causing the mobile terminal to, based on human attributes identified by the image recognition processing based on the image taken of the target person, acquire recommendation information for the human attributes, from the second data transmitted to the register terminal and display the acquired recommendation information.
